# EUROPÄISCHE PATENTSCHRIFT

(11) **EP 0 858 930 B1**
(45) Veröffentlichungstag und Bekanntmachung des Hinweises auf die Patenterteilung: **12.12.2001**
(21) Anmeldenummer: 98102608.1
(22) Anmeldetag: 16.02.1998
(51) Int. Cl.: B60P 7/00, B60J 5/06

(54) **Plane mit Klemmvorrichtungen für Lastfahrzeuge**
Tarpaulins with clamping device for lorries
Bâche à dispositif de serrage pour camions

(30) Priorität: 15.02.1997 DE 19705880; 16.05.1997 DE 19720525
(43) Veröffentlichungstag der Anmeldung: 19.08.1998
(73) Patentinhaber: Schmitz-Anhänger Fahrzeugbau-Gesellschaft mbH & Co., 48341 Altenberge (DE)
(72) Erfinder: Schmitz, Peter, 48341 Altenberge (DE); Kötter, Jürgen, 49545 Tecklenburg (DE)
(74) Vertreter: Hoffmeister, Helmut, Dr. Dipl.-Phys.

(56) Entgegenhaltungen:
- FR-A- 2 653 395
- FR-A- 2 688 462

## Beschreibung

Die Erfindung betrifft eine Plane mit Klemmvorrichtungen für Lastfahrzeuge, die wenigstens an einem unteren Rand und an einem oberen Rand mit zahlreichen, in Fahrtrichtung beabstandeten, Anschlußelementen versehen ist, die jeweils mit einer Klemmvorrichtung versehen sind, in der die Plane mehrlagig in einem Verdickungsbereich lösbar gehalten ist.

Bei bekannten Curtainsider-Fahrzeugen ist die Seitenplane mit ihrem unteren Rand über mehrere Ösen und Verzurrungsriemen oder Spanngurten am Außenrahmen des Fahrzeugschassis straffbar angebracht. Die Spanngurte sind mit Spannschlössern versehen.

Die Höhe der Plane ist damit entsprechend zur Höhe der freien Zugangsseite des Curtainsider-Fahrzeuges bestimmt und kann nicht ohne weiteres geändert werden. Wenn ein Spediteur ein anderes, niedrigeres oder höheres Zugfahrzeug verwenden und bei dem Auflieger die Dachkonstruktion anheben oder absenken will, kann er demnach die vorhandene Plane nicht verwenden, da diese perforiert ist und erst über umständliche Konfektionierungsarbeiten wieder auf ein neues Maß gebracht werden muß. Überdies müssen Planen bei der Neuausstattung eines Fahrzeuges individuell zugeschnitten werden. Toleranzen und Abweichungen sind schwer zu berücksichtigen. Die Perforationen führen häufig zu Rissen in der Plane.

Jede Plane ist daher üblicherweise für ein bestimmtes Fahrzeug genau angefertigt. Sie muß insbesondere aufgrund besonderer Wünsche (Bedruckung, Ausstattung) jeweils individuell gefertigt werden. Das verteuert die Lagerhaltung und verlängert die Auslieferungszeiten.

Durch die Perforationen hindurch und über den oberen Rand der Plane hinweg kann Feuchtigkeit in das Innere des Fahrzeugs eindringen.

Aus der gattungsbildenden DE-U-8 413 309 ist eine Plane mit Anschlußelementen bekannt, die an wenigstens einer ihrer Kanten mit Anschlußelementen versehen ist, über die ein Spannen der Plane ermöglicht ist. Dazu ist die Planenkante zwischen zwei gegeneinander verschraubbaren Klemmschenkeln gehalten. Um ein Herausrutschen der geklemmten Plane aus den Klemmschenkeln zu verhindern, ist die Planenkante an ihrem Saum durch ein eingenähtes Seil verdickt. Die Klemmschenkel sind an die Verdikkung des Planen-Saums angepaßt, so daß hier eine formschlüssige Verbindung ermöglicht ist. Nachteilig an der bekannten Plane ist jedoch, daß der Planen-Saum entsprechend vorbereitet sein muß. Ein Anbringen der Anschlußelemente an einer beliebigen Stelle der Plane ist somit nicht möglich. Wegen des über die gesamte Planenkante verstärkten Planen-Saums kann die Plane schlecht aufgerollt oder in Falten gelegt werden, wodurch sie für moderne Curtainsider-Fahrzeuge nicht einsetzbar ist.

Es stellt sich damit die Aufgabe, die vorgenannten Nachteile zu vermeiden, die Umrüstung von Aufliegern mit verstellbarem Dachaufbau zu erleichtern und die Lagerhaltung von Planen zu vereinfachen, insbesondere Planen gleichen Zuschnittes für unterschiedliche Aufbauhöhen verwendbar zu machen, und damit auch die Auslieferungszeiten zu verkürzen. Auch soll das Eindringen von Feuchtigkeit in den Laderaum verhindert werden.

Diese Aufgabe wird bei einer Plane mit Klemmvorrichtung der eingangs genannten Art durch die Merkmale des Kennzeichens des unabhängigen Ansprüchs 1 gelöst.

Eine Plane mit den vorgenannten Eigenschaften ist für verschiedene Fahrzeugaufbau-Höhen einsetzbar. Nach Lösen der Klemmvorrichtung kann die Plane nach unten oder nach oben gezogen werden, d.h. der Planenüberstand vergrößert oder verkleinert sich. Eine Beanspruchung der Plane im Bereich der Anschlußelemente wird durch die großflächige Klemmung weitgehend vermieden.

Die Plane ist gut aufrollbar oder faltbar und eignet sich daher für Curtainsider-Fahrzeugaufbauten. Ein Perforieren der Plane ist nicht erforderlich. Überdies wird über die Breite des Klemmstückes eine verbesserte Gewichtsverteilung erreicht als bei Perforationen, die immer eine Schwächung der Plane bedeuten. Die Reißfestigkeit und damit auch die Verwendungsdauer einer erfindungsgemäßen Plane ist gegenüber bekannten Planen wesentlich erhöht.

Beschädigte Anschlußelemente können durch Schrauben einfach und schnell ausgewechselt werden.

Zwischen Plane und Anschlußelementen wird durch die Klemmvorrichtungen auch bei den hohen Spannkräften, die von den am Fahrzeugchassis von Curtainsider-Fahrzeugen angebrachten Spannvorrichtungen bewirkt werden, eine feste und sichere Verbindung erreicht.

Planen mit gleichem Zuschnitt können für verschiedene Aufbauhöhen - auch durch nachträgliches Angleichen - verwendet werden. Die Planenlängen können völlig stufenlos eingestellt werden. Auch eine Rasterung ist nicht erforderlich. Weniger Varianten von Planen kommen zum Einsatz, so daß höhere Stückzahlen für gleiche Planen verwendet werden können. Die Auslieferungszeiten sind verkürzt.

Ein weiterer Vorteil der Erfindung besteht darin, daß ein Eindringen von Nässe in den Laderaum des Fahrzeugs wirksam verhindert ist. Dazu bildet wenigstens einer der ausgestellten Faltenabschnitte außerhalb der Anschlußelemente eine nach unten hängende Falte. Vorzugsweise ist wenigstens der Faltenabschnitt im Bereich des oberen Planenrands durch die Klemmvorrichtungen in dieser Weise angeordnet. Dadurch wird verhindert, daß an der Planenaußenseite haftende Nässe durch den Fahrtwind über den oberen Planenrand hochgedrückt wird und in das Laderauminnere gelangt.

Bei einer bevorzugten Ausführungsform der Erfindung ist jeder Klemmvorrichtung ein Füllstab zugeordnet ist, dessen Längenmaß das jeweilige Quermaß der Klemmvorrichtung nicht überschreitet und um den das Material des ausgestellten Faltenabschnitts der Plane herumgelegt ist, wobei der Faltenabschnitt mit dem Füllstab einen mehrlagigen Verdickungsbereich bildet. Zusätzlich zu den auf Reibung basierenden Klemmkräften in der Klemmvorrichtung wird bei dieser Ausführungsform die in die Plane einleitbare Kraft durch Formschluß erhöht. Durch die Begrenzung des Füllstabs auf den Bereich der Klemmvorrichtung bleibt die Plane roll- und faltbar. Da der Füllstab ein separates, nachträglich einzulegendes Teil ist, sind keinerlei Veränderungen an der Plane erforderlich. Auch werden die Biegeradien der Plane durch eine Klemmvorrichtung mit Füllstab erhöht, wodurch die Belastung für das Planenmaterial im Klemmbereich weiter reduziert ist.

Eine weitere Ausführungsform sieht einen Füllstab vor, der wenigstens eine Kante aufweist. Die Klemmvorrichtung weist dazu wenigstens eine kompatible Kanten-Aufnahme auf, die den in die Klemmvorrichtung eingelegten Füllstab durch Formschluß rotatorisch festlegt. Dadurch wird verhindert, daß bei sehr hohen Spannkräften an der Plane und/oder einer durch Feuchtigkeit reduzierten Reibung der eingeklemmte Faltenabschnitt von dem eingelegten Füllstab abgerollt und aus der Klemmvorrichtung herausgezogen wird.

Möglich ist es, den Füllstab mehreckig auszubilden und die Klemmvorrichtung so zu gestalten, daß der Füllstab mit dem darum gelegten Faltenabschnitt durch Formschluß festgelegt ist, so daß ein Herausdrehen des eingeklemmten Faltenabschnitts aus der Klemmvorrichtung unmöglich ist.

Vorzugsweise wird eine solche rotatorische Festlegung des Füllstabs aber dadurch erreicht, daß der Füllstab eine zylindrische Mantelfläche mit einem sich darauf koaxial erstrekkenden Steg aufweist, der wenigstens teilweise zwischen den Klemmbacken der Klemmvorrichtung festlegbar ist.

Solche Füllstäbe können aus einem Abschnitt eines Metall- oder Kunststoffstabes, insbesondere eines Strangpreßprofils oder eines extrudierten Kunststoffprofils, bestehen und damit besonders kostengünstig hergestellt sein.

Vorzugsweise weisen die Anschlußelemente am oberen Rand der Plane jeweils wenigstens eine Planenrolle auf, die in einem Dach-Außenholm des Fahrzeugsaufbaus geführt ist, so daß die unverspannte Plane längsverschieblich ist. Eine Integration von Klemmvorrichtung und Planenführung ermöglicht eine kompakte Bauweise und reduziert die Herstellungskosten.

Dementsprechend sind die Anschlußelemente am unteren Rand der Plane vorzugsweise Spanngurte für das verspannte Anbringen der Plane am Außenrahmen des Fahrzeugchassis, welche Spanngurte aus einer Spannvorrichtung und einem Gurtband bestehen und welche Spanngurte an jeweils einem der Gurtbandenden mit einer Klemmvorrichtung für eine lösbare Befestigung eines ausgestellten Faltenabschnittes der Plane und an dem anderen Gurtbandende mit einem Element zur Befestigung am Außenrahmen des Fahrzeugchassis, vorzugsweise einem Haken, versehen sind.

In einer weiteren Ausführungsform ist am oberen Rand der Plane ein aus der Klemmvorrichtung herausragender oberer Planen-überstand vorhanden, der in das Fahrzeuginnere gerichtet ist. Eine Plane wird dabei größer gefertigt, als der Fahrzeugaufbau es erfordert. Der Überstand ist bei einer erfindungsgemäßen Plane einfach an die Fahrzeughöhe angleichbar. Die durch den Überstand gebildete Reserve ermöglicht es, die Plane auf Fahrzeugen mit größerer Aufbauhöhe zu verwenden.

Da der untere Planenrand erfahrungsgemäß großem Verschleiß ausgesetzt ist, ist es auch denkbar, einen verschlissenen unteren Rand einer Plane in einer Länge entsprechend dem oberen Planenüberstand abzuschneiden. Nach Neupositionierung der Klemmvorrichtungen kann die Plane dann wiederverwendet werden. Die mechanischen und optischen Eigenschaften der Plane bleiben nach der Reparatur - im Gegensatz zum Reparieren durch Aufnähen von Flicken - erhalten.

Die Erfindung bezieht sich ferner auf ein Curtainsider-Fahrzeug, insbesondere einen Sattelanhänger, mit wenigstens einer Plane mit Klemmvorrichtungen der vorgenannten Art.

Weitere Unteransprüche sind in der Beschreibung der Ausführungsbeispiele erläutert, die in der Zeichnung dargestellt sind. Die Figuren der Zeichnung zeigen im einzelnen:
- Fig. 1: schematisch einen Curtainsider-Sattelanhänger mit einer Plane in Seitenansicht;
- Fig. 2: eine Plane mit Klemmvorrichtung im Bereich des Fahrzeug-Außenrahmens in schematischen Schitt-Ansicht;
- Fig. 3: eine weitere Ausführugsform einer Plane mit Klemmvorrichtung im Bereich des Fahrzeug-Außenrahmens, ebenfalls in schematischen Schnitt-Ansicht;
- Fig. 4: eine Klemmvorrichtung mit symmetrisch zueinander gerichteten Klemmbacken;
- Fig. 5: eine weitere Ausführungsform der Klemmvorrichtung, mit bogenförmigen Klemmbacken;
- Fig. 6: die Führung der Plane zwischen ihrem oberen und unteren Rand in schematischer Seitenansicht und
- Fig. 7: eine Ausführungsform einer Klemmvorrichtung mit eingelegtem Füllstab in Schnittdarstellung.

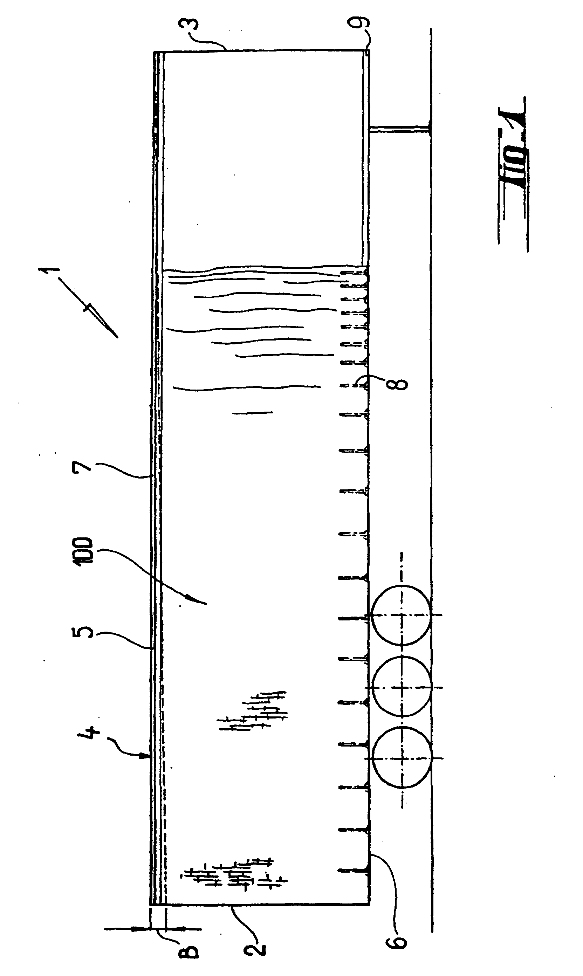

In Fig. 1 ist ein Curtainsider-Fahrzeug 1, von der Seite gesehen, schematisch dargestellt. Bei dem Fahrzeug 1 handelt es sich um ein sogenanntes Keil-Fahrzeug, bei dem die Aufbauhöhe an der Hecktür 2 um den Betrag B größer ist als an der Frontseite 3. Entlang des Fahrzeugdaches 4 verläuft zu beiden Seiten ein Dach-Außenholm 7, an dem eine Plane 100 längsverschieblich an ihrem oberen Rand 5 aufgehängt ist. Aus der Fig. 1 ist zu erkennen, daß von der rechten Seite der Figur aus nach links ein Teil der Plane 100 zusammengeschoben worden ist. Ein unterer Rand 6 der Plane ist durch mehrere, mit Spanngurten versehene Anschlußelemente 8 nach unten hin straffbar.

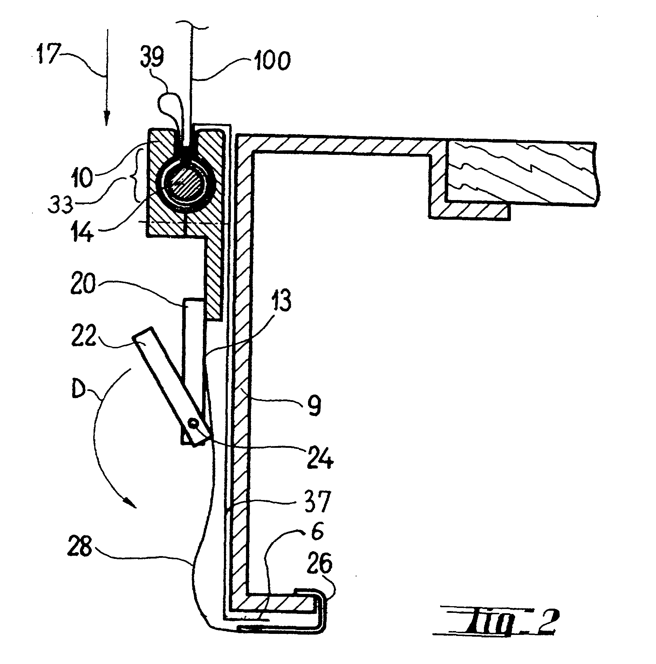

Die Figur 2 zeigt ein Anschlußelement für den unteren Rand der Plane 100 an einem Curtainsider-Fahrzeug 1. Im Bereich des Außenrahmens 9 des Fahrzeugs ist die Plane in einer Klemmvorrichtung 10 gehalten, die mit einem Spanngurt 20 verbunden ist. Der Spanngurt 20 besteht aus einem Gurtband 28, das an einem Ende mit der Klemmvorichtung 10 verbunden ist und das durch ein Spannschloß 22 läuft. An seinem anderen Ende weist das Gurtband 28 einen Haken 26 auf, der an der Unterseite des Außenprofils 9 einzuhängen ist, wobei ein unterer Planenüberstand am Rahmenprofil 9 festgeklemmt wird. Durch eine Drehbewegung entsprechend dem Pfeil D des Spannschlosses 22 um den Drehpunkt 24 wird das Gurtband 28 straff gespannt und die mit dem Spanngurt 20 verbundene Klemmvorrichtung 10 wird nach unten gezogen. Auf die in der Klemmvorrichtung 10 befestigte Plane 100 wird dadurch eine Kraft ausgeübt, die durch den mit 17 bezeichneten Pfeil in der Figur dargestellt ist.

Die Klemmvorrichtung setzt sich in einer Lasche 13 fort, die mit dem Spanngurt 20 verschraubt oder auf eine andere Weise mit diesem verbunden ist. Die Lasche 13 kann aber auch einstückig mit dem Spanngurt 20 hergestellt werden.

Bei der Montage wird die Plane 100 in eine Falte 39 gelegt, so daß sich ein zweilagiger Faltenabschnitt 31 ergibt. In den Bereich des Faltenabschnitts 31 wird dann ein Füllstab 14 manuell eingeschoben. Der aus Faltenabschnitt 31 und Füllstab 14 gebildete Verdickungsbereich 33 der Plane 100 wird in die Klemmvorrichtung 10 eingelegt. Anschließend wird die Schraubverbindung der Klemmvorrichtung angezogen, so daß sich die Klemmbacken 11,12 fest anlegen und kein seitliches Rutschen des Füllstabes 14 mehr möglich ist.

Der Füllstab 14 hat eine Länge, die etwa der Breite der Klemmvorrichtung 10 entspricht. Der Füllstab 14 reicht nicht über die gesamte Länge des Curtainsider-Fahrzeuges 1, da dann die Schiebeplane nicht mehr beiseite geschoben werden könnte. Es hat sich gezeigt, daß als Füllstäbe einfache Stahlstangenabschnitte, aber auch Kunststoffstangenabschnitte verwendet werden können. Der Füllstab 14 kann auch aus nicht-rostendem Stahl, Messing und dergleichen bestehen und an seiner Außenseite zur Erhöhung des Reibungswiderstandes aufgerauht, gerillt oder mit Riefen versehen sein, so daß die um ihn gelegte Plane auch bei möglicherweise leichtem Lockern der Klemmvorrichtung oder bei durch Feuchtigkeit verminderter Reibung nicht sofort abrutscht. Anstelle zylindrischer Füllstäbe können auch solche mit polygonalem oder sternförmigem Querschnitt verwendet werden. Es sind Voll- oder Hohlprofile einsetzbar.

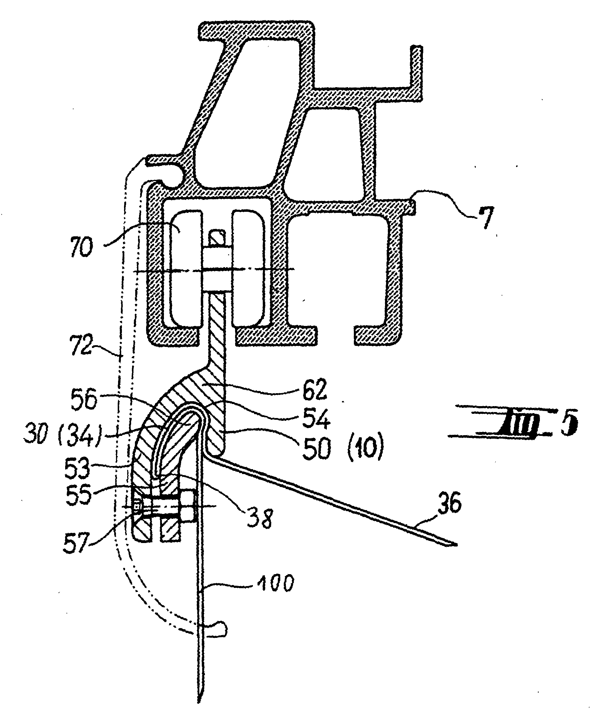

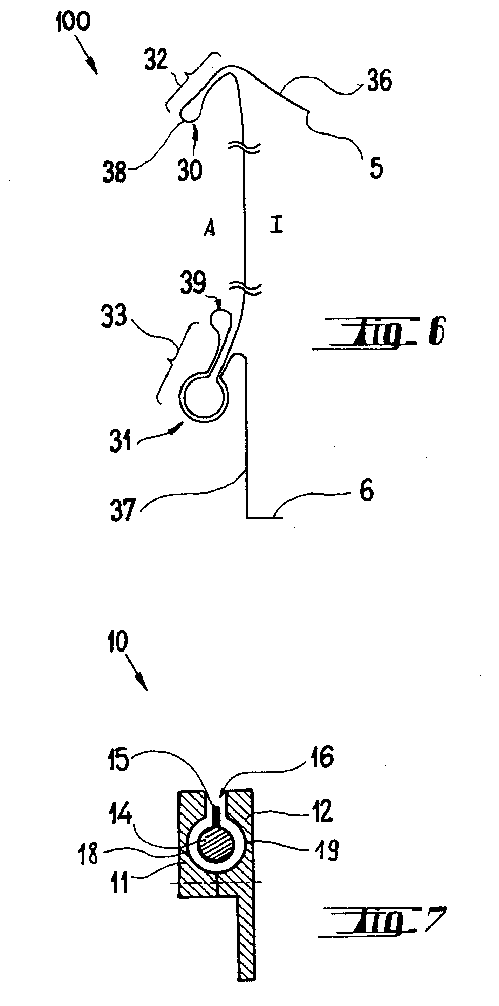

Wie Figur 7 zeigt, besteht die Klemmvorrichtung 10 vorzugsweise aus zwei Klemmbacken 11, 12, die gegeneinander verschraubbar sind. Wenigstens eine der Klemmbacken 11, 12 ist mit einer Ausbuchtung versehen, in die der Verdickungsbereich 33 der Plane 100 eingelegt werden kann. Die Ausbuchtungen 18, 19 können auch auf beiden Klemmbacken vorhanden sein und sich gegenseitig zu einem Aufnahmeraum für den Verdikkungsbereich 33 ergänzen. Die hier dargestellte bevorzugte Ausführungsform eines Füllstab 14 weist einen koaxial verlaufenden Füllstab-Steg 15 auf, der sich bis in den Planenaustritt 16, an dem der Faltenabschnitt 31 aus der Klemmvorrichtung 10 austritt, erstreckt. Der im Bereich des Planenaustritts 16 angeordnete Füllstab-Steg 15 ist durch die benachbarten Klemmbacken 11, 12 formschlüssig gegen Verdrehen gesichert.

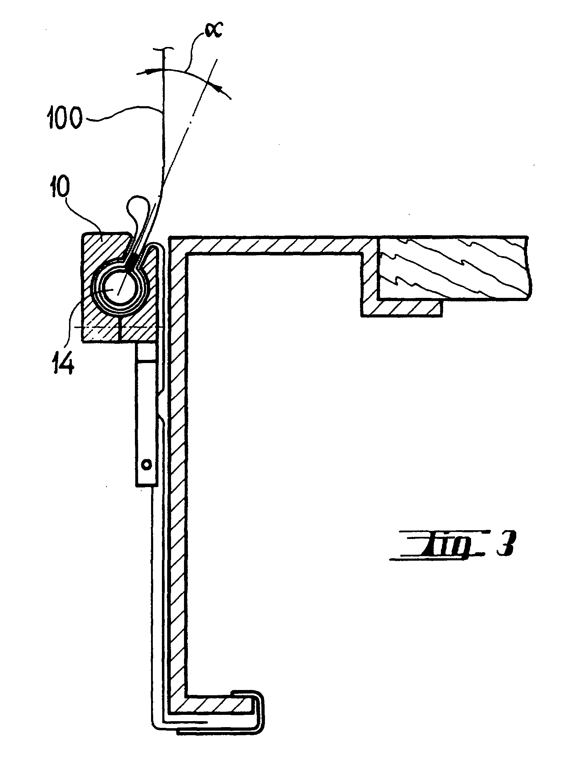

Fig. 3 zeigt eine straff gespannte Plane 100 im Bereich des unteren Planenrands mit einer Klemmvorrichtung 10 in einer weiteren Ausführungsform. Der Austritt der Plane aus der Klemmvorrichtung 10 ist dabei gegenüber der Fahrzeugseitenwand um einen Winkel α von ca. 30° geneigt, so daß die Plane eng am Fahrzeug anliegt und sich ein besonders günstiger Kraftfluß in der gespannten Plane ergibt.

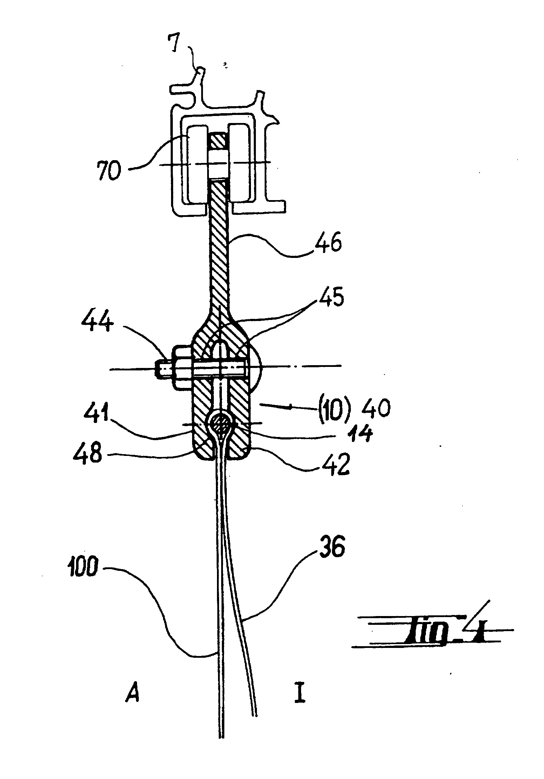

Bei einer bevorzugen Ausführungsform wird die Plane 100 in der Weise geführt, die in Fig. 6 dargestellt ist. Die Plane 100 ist im unteren Bereich in eine Planenfalte 39 gelegt, wobei sich Bereiche der zum Inneren I des Laderaums gerichteten Planenoberfläche berühren. Es wird ein zur Fahrzeugaußenseite A ausgestellter, zweilagiger Faltenabschnit 31 gebildet. Der zweilagige Faltenabschnitt 31 wird nochmals in eine schlaufenförmige Bahn gelegt und bildet, evtl. zusammen mit einem zusätzlichen Füllstab, einen Verdickungsbereich 33. Innerhalb einer Klemmvorrichtung ist die Plane somit vierlagig geklemmt. Unterhalb des geklemmten Verdickungsbereichs 33 geht die Plane in einen unteren Planenüberstand 37 über, der nicht gespannt ist.

Der untere Planenüberstand 37 liegt unterhalb der hier nicht dargestellten Spanngurte und der untere Rand 6 der Plane 100 ist durch den Haken 26 des Spanngurtes 20 an die Unterseite des Fahrzeug-Außenprofil 9 angelegt, wie in Fig. 2 dargestellt.

Wie Fig. 6 weiterhin zeigt, ist die Plane 100 im Bereich ihres oberen Randes 5 in eine weitere, nach außen gestellte Planenfalte 38 gelegt. Der so erhaltene zweilagige, schlaufenförmige Faltenabschnitt 30 bildet einen klemmbaren Verdikkungsbereich 32. Außerdem ist der Faltenbschnitt 30 so zur Fahrzeugaußenseite A ausgestellt, daß die Planenfalte 38 herabhängt. An der Planenaußenseite aufsteigende Nässe wird dadurch unter den Faltenabschnitt 30 gedrückt und tropft an der nach unten hängenden Planenfalte 38 ab. Ein Eindringen von Nässe ins Fahrzeuginnere I wird verhindert. Der obere Planen-überstand 36 ragt in das Fahrzeuginnere I. Soll die Plane in der Höhe eingestellt werden, so wird die obere Klemmung etwas gelockert und an der Planenmitte oder am Überstand 36 bis zur Einstellung der erforderlichen Planenhöhe gezogen. Ein Höhenunterschied B, wie er bei dem Fahrzeug gemäß Fig. 1 vorhanden ist, kann ohne weiteres ausgeglichen werden.

Ein Ausführungsbeispiel (Klemmvorrichtung 40) für den oberen Planenrand ist in Figur 4 dargestellt. Eine Lasche 46 geht in zwei symmetrisch zueinander angeordnete, einstückig hergestellte und eine U-förmige Konfiguration bildende Backen 41,42 über, die eine Klaue mit einer Ausnehmung 48 für die Unterbringung des Füllstabes 14 bilden. Durch Anziehen einer in der Bohrung 45 geführten Schraubverbindung 44 werden die Backen 41,42 gegeneinander bewegt, wodurch ein dazwischen liegender Verdickungsbereich 33 der Plane geklemmt wird. Die Höhenverstellung der Plane erfolgt durch das Lösen der Schraubverbindung 44 und das leichte Spreizen der Backen 41,42.

An der Lasche 46 ist wenigstens eine im Dach-Außenholm 7 geführte Planenlaufrolle 70 befestigt, so daß die unverspannte Plane über die Fahrzeugseite längsverschieblich ist.

Schließlich ist der Fig. 5 ein viertes Ausführungsbeispiel zu entnehmen, das ebenfalls besonders für die Klemmung der Plane 100 im oberen Bereich geeignet ist. Die Klemmvorrichtung 50 weist zwei bogenförmige Klemmbacken 53 und 55 auf und hält reibschlüssig einen doppelten Planeneinschlag 34. Die beiden Klemmbacken 53, 55 weisen am ihren oberen Ende jeweils eine Abrundung 54,56 auf, damit die Plane 100 sanft in den Planeneinschlag 34 und in den Planen-Überstand 36 übergeht. Eine Planenfalte 38 des Planeneinschlags 34 liegt zwischen den beiden bogenförmigen Klemmbacken 53,55; sie endet oberhalb der Feststellschraube 57, mit der die vorgenannten Teile verklemmt werden können. Eine Höhenverstellung der Plane erfolgt nach Lösen der Feststellschraube 57. Wenigstens einer der Klemmbacken 53,55 setzt sich in einer Lasche 62 fort, an der eine Planlaufrolle 70 befestigt ist. Diese ist wiederum im Dach-Außenholm 7 geführt und ermöglicht das Verschieben der unverspannten Plane 100.

Durch die bogenförmigen Backen wird der Verdickungsbereich 30 mit nach unten weisender Planenfalte 38 geklemmt, wodurch das Eindringen von Feuchtigkeit in das Fahrzeuginnere I verhindert wird. Dazu ist zusätzlich eine Naßsperre 72 vorgesehen, die in das Profil des Dach-Außenholms 7 einrastbar, einschiebbar oder in sonstiger Weise befestigbar ist. Die Naßsperre deckt den gesamten oberen Bereich von Außenholm 7, Planenführungsrollen 70 und der nach unten weisenden Planenfalte 38 ab. Das Profil der Naßsperre 72 ist im unteren Bereich so gebogen, daß der untere Schenkel der Naßsperre gegen die Plane 100 drückt und das Eindringen von Feuchtigkeit schon größtenteils verhindert.

Die Plane besteht üblicherweise aus armiertem PET-Folienmaterial. Lasche und Klemmstück werden vorzugsweise aus Stahl hergestellt. Hier können jedoch auch Kunststoffmaterialien, beschichtete Metalle oder dergleichen verwendet werden. Ein besonderer Vorteil ist, daß die Einzelteile der Klemmvorrichtungen so einfach gestaltet sind, daß sie als Abschnitte eines Strangpreßprofils oder eines Kunststoffprofils vorgefertigt werden können. Als Material kommt dabei auch insbesondere Aluminium in Frage.

### Bezugszeichenliste:

- 100: Plane
- 1: Curtainsider-Fahrzeug
- 2: Hecktür
- 3: Frontseite
- 4: Fahrzeugdach
- 5: oberer Rand
- 6: unterer Rand
- 7: Dach-Außenholm
- 8: Anschlußelement
- 9: Außenrahmen
- 10: Klemmvorrichtung
- 11: Klemmbacke
- 12: Klemmbügel
- 13: Lasche
- 14: Füllstab
- 15: Füllstab-Steg
- 16: Planenaustritt
- 17: Kraftrichtung
- 18,19: Ausbuchtung
- 20: Spanngurte
- 22: Spannschloß
- 24: Drehachse
- 26: Haken
- 28: Gurtband
- 30,31: Faltenabschnitt
- 32,33: Verdickungsbereich
- 34: Planeneinschlag
- 36: oberer Planenüberstand
- 37: unterer Planenüberstand
- 38,39: Planenfalte
- 40: Klemmvorrichtung
- 41,42: Klemmbacken
- 44: Schraubverbindung
- 45: Bohrung
- 46: Lasche
- 48: Ausnehmung
- 50: Klemmvorrichtung
- 54,56: Abrundung
- 53,55: Klemmbacken
- 57: Feststellschraube
- 70: Planenrolle
- 72: Naßsperre

- D: Drehbewegung
- A: Fahrzeugaußenseite
- I: Fahrzeuginnenseite

## Patentansprüche

1. Plane (100) mit Klemmvorrichtung für Lastfahrzeuge (1), welche Plane wenigstens an einem unteren Rand (6) und an einem oberen Rand (5) mit zahlreichen, in Fahrtrichtung beabstandeten, Anschlußelementen (8) versehen ist, die jeweils mit einer Klemmvorrichtung (10,40,50) versehen sind, in der die Plane mehrlagig in einem Verdickungsbereich (32,33) lösbar gehalten ist,
**dadurch gekennzeichnet,**
- **daß** die Plane (100) eine Seiten-Schiebeplane für Curtainsider-Fahrzeuge (1), insbesondere Sattelanhänger, ist,
- **daß** die Höhe der Plane (100) entsprechend der Aufbauhöhe des Fahrzeugs um eine Planenhöhendifferenz (B) veränderbar ist
- **daß** die Plane wenigstens an einem ihrer Ränder (5,6) in eine Falte (38,39) gelegt ist, wobei sich Bereiche der zum Inneren (I) des Laderaums gerichteten Planenoberfläche kontaktieren und ein mehrlagiger, schlaufenförmiger Faltenabschnitt (30,31) geschaffen ist,
- **daß** der Faltenabschnitt (30,31) in der Klemmvorrichtung (10,40,50) so befestigt ist, daß der geklemmte Verdikkungsbereich (32,33) der Plane zur Fahrzeugaußenseite (A) ausgestellt ist.

2. Plane (100) nach Anspruch 1, **dadurch gekennzeichnet, daß** wenigstens einer der ausgestellten Faltenabschnitte (30,31) außerhalb der Anschlußelemente eine nach unten hängende Falte (38,39) bildet.

3. Plane nach Anspruch 1 bis 2, **dadurch gekennzeichnet, daß** jeder Klemmvorrichtung (10,40) ein Füllstab (14) zugeordnet ist, dessen Längenmaß das jeweilige Quermaß der Klemmvorrichtung (10,40) nicht überschreitet und um den das Material des ausgestellten Faltenabschnitts (30,31) der Plane (100) herumgelegt ist, wobei der Faltenabschnitt (30,31) mit dem Füllstab (14) einen mehrlagigen Verdickungsbereich (32,33) bildet.

4. Plane (100) nach Anspruch 3, **dadurch gekennzeichnet, daß** der Füllstab (14) wenigstens eine Kante (Steg 15) aufweist und die Klemmvorrichtung (10,40) wenigstens eine kompatible Kantenaufnahme aufweist, die den in die Klemmvorrichtung (10,40) eingelegten Füllstab (14) mit dem darumgelegten Faltenabschnitt (30,31) durch Formschluß rotatorisch festlegt.

5. Plane (100) nach Anspruch 4, **dadurch gekennzeichnet, daß** der Füllstab (14) eine zylindrische Mantelfläche mit einem sich darauf koaxial erstreckenden Steg (15) aufweist, der wenigstens teilweise zwischen den Klemmbacken der Klemmvorrichtung (10,40) festlegbar ist

6. Plane (100) nach wenigstens einem der vorhergehenden Ansprüche, **dadurch gekennzeichnet, daß** der Füllstäb (14) als Abschnitt eines Metall- oder Kunststoffstabes, insbesondere eines Strangpreßprofils, hergestellt ist.

7. Plane (100) nach wenigstens einem der vorhergehenden Ansprüche, **dadurch gekennzeichnet, daß** die Anschlußelemente am oberen Rand (5) der Plane jeweils wenigstens eine Planenrolle (70) aufweisen, die in einem Dach-Außenholm (7) des Fahrzeugsaufbaus geführt ist, so daß die unverspannte Plane längsverschieblich ist.

8. Plane (100) nach wenigstens einem der vorhergehenden Ansprüche, **dadurch gekennzeichnet, daß** an dem Anschlußelement (8) am oberen Rand (5) der Plane ein aus der Klemmvorrichtung (40,50) herausragender oberer Planenüberstand (36) vorhanden ist, der in das Fahrzeuginnere (I) gerichtet ist.

9. Plane (100) nach wenigstens einem der vorhergehenden Ansprüche, **dadurch gekennzeichnet, daß** die Anschlußelemente am unteren Rand (6) der Plane Spanngurte (20) für das verspannte Anbringen der Plane am Außenrahmen (9) des Fahrzeugchassis sind, welche Spanngurte (20) aus einer Spannvorrichtung (Spannschloß 22) und einem Gurtband (28) bestehen und welche Spanngurte (20) an jeweils einem der Gurtbandenden mit einer Klemmvorrichtung (10) für eine lösbare Befestigung eines ausgestellten Faltenabschnittes (31) der Plane (100) und an dem anderen Gurtbandende mit einem Element zur Befestigung am Außenrahmen (9) des Fahrzeugchassis, vorzugsweise einem Haken (26), versehen sind.

10. Plane (100) nach einem der vorhergehenden Ansprüche, **dadurch gekennzeichnet, daß** die Klemmvorrichtung (40) aus zwei symmetrisch zueinander angeordneten, eine U-förmige Konfiguration bildenden Klemmbacken (41,42) besteht, die jeweils mit einer Bohrung (45) für eine Schraubverbindung (44) versehen sind und daß die Ausnehmung (48) für die Unterbringung des Füllstabes (14) und des über den Füllstab gelegten Faltenabschnitts (30) der Plane in die Klemmbacken (41,42) der Klemmvorrichtung (40) eingearbeitet ist.

11. Plane (100) nach wenigstens einem der vorhergehenden Ansprüche, **dadurch gekennzeichnet, daß** der geklemmte Verdickungsbereich (32) der Plane (100) in eine aus zwei bogenförmigen Klemmbacken (53,55) gebildete Klemmvorrichtung (50) eingelegt ist, wobei die bogenförmigen Klemmbacken (53,55) zur Fahrzeugaußenseite (A) ausgestellt sind.

12. Plane (100) nach Anspruch 11, **dadurch gekennzeichnet, daß** das untere Ende der geklemmten Planenfalte (38) oberhalb einer durch die beiden bogenförmigen Klemmbacken (53,55) reichenden Feststellschraube (57) endet.

13. Curtainsider-Fahrzeug (1), insbesondere Sattelanhänger, mit wenigstens einer Plane (100) gemäß den Ansprüchen 1 bis 12.

## Claims

1. A tarpaulin (100) with a clamping device for goods vehicles (1), said tarpaulin being provided with numerous connecting elements (8) spaced apart in the direction of travel, said connecting elements being disposed at least at a bottom edge (6) and at a top edge (5), each connecting element being provided with a clamping device (10, 40, 50) in which the tarpaulin is held releasably in a plurality of layers in a thickened zone (32, 33), **characterised in that**:
- the tarpaulin (100) is a side sliding tarpaulin for curtainsider vehicles (1), particularly semitrailers,
- **in that** the height of the tarpaulin (100) is variable by a tarpaulin height difference (B) according to the vehicle superstructure height,
- **in that** the tarpaulin is placed in a fold (38, 39) at one of its edges (5, 6) at least, zones of the tarpaulin surface directed towards the interior (I) of the cargo area contacting one another and a multi-layer loop-shaped fold portion (30, 31) being created,
- **in that** the fold portion (30, 31) is so fixed in the clamping device (10, 40, 50) that the clamped thickened zone (32, 33) of the tarpaulin is exposed to the vehicle exterior (A).

2. A tarpaulin (100) according to claim 1, **characterised in that** at least one of the exposed fold portions (30, 31) forms a downwardly hanging fold (38, 39) outside the connecting elements.

3. A tarpaulin (100) according to claims 1 and 2, **characterised in that** each clamping device (10, 40) has an associated filler rod (14) whose longitudinal dimension does not exceed the respective transverse dimension of the clamping device (10, 40) and is placed around the material of the exposed fold portion (30, 31) of the tarpaulin (100), the fold portion (30, 31) together with the filler rod (14) forming a multi-layer thickened zone (32, 33).

4. A tarpaulin (100) according to claim 3, **characterised in that** the filler rod (14) has at least one edge (web 15) and the clamping device (10, 40) has at least one compatible edge holder which by positive engagement rotationally fixes the filler rod (14) inserted in the clamping device (10, 40) together with the fold portion (30, 31) extending around said filler rod (14).

5. A tarpaulin (100) according to claim 4, **characterised in that** the filler rod (14) has a cylindrical outer surface with a web (15) extending coaxially thereon, said web being at least partially fixable between the clamping jaws of the clamping device (10, 40).

6. A tarpaulin (100) according to at least one of the preceding claims, **characterised in that** the filler rod (14) is manufactured as part of a metal or plastic rod, particularly an extruded profile.

7. A tarpaulin (100) according to at least one of the preceding claims, **characterised in that** the connecting elements each have at least one tarpaulin roller (70) at the top edge (5) of the tarpaulin, said roller being guided in an outer roof member (7) of the vehicle superstructure so that the unclamped tarpaulin is longitudinally displaceable.

8. A tarpaulin (100) according to at least one of the preceding claims, **characterised in that** an upper tarpaulin surplus (36) extending out of the clamping device (40, 50) is provided at the connecting element (8) at the top edge (5) of the tarpaulin and is directed into the vehicle interior (I).

9. A tarpaulin (100) according to at least one of the preceding claims, **characterised in that** the connecting elements at the botttom edge (6) of the tarpaulin are tensioning straps (20) for applying the tarpaulin in the tensioned state to the outer frame (9) of the vehicle chassis, said tensioning straps (20) consisting of a tensioning device (turnbuckle 22) and a strap (28) and being provided, in each case at one of the strap ends, with a clamping device (10) for releasable fixing of an exposed fold portion (31) of the tarpaulin (100) and, at the other strap end, with an element for fixing to the outer frame (9) of the vehicle chassis, preferably a hook (26).

10. A tarpaulin (100) according to any one of the preceding claims, **characterised in that** the clamping device (40) consists of two clamping jaws (41, 42) which are disposed symmetrically to one another and form a U-shaped configuration and are each provided with a bore (45) for a screw connection (44) and **in that** the opening (48) for accommodating the filler rod (14) and the tarpaulin fold portion (30) placed over the filler rod is formed in the clamping jaws (41, 42) of the clamping device (40).

11. A tarpaulin (100) according to at least one of the preceding claims, **characterised in that** the clamped thickened zone (32) of the tarpaulin (100) is placed in a clamping device (50) formed by two arcuate clamping jaws (53, 55) the arcuate clamping jaws (53, 55) being exposed to the vehicle exterior (A).

12. A tarpaulin (100) according to claim 11, **characterised in that** the bottom end of the clamped tarpaulin fold (38) terminates above a fixing screw (57) extending through the two arcuate clamping jaws (53, 55).

13. Curtainsider vehicle (1), particularly a semitrailer, having at least one tarpaulin (100) according to claims 1 to 12.

## Revendications

1. Bâche (100) comportant un dispositif de serrage pour véhicules utilitaires (1), ladite bâche étant munie, au moins sur un bord inférieur (6) et sur un bord supérieur (5), de nombreux éléments de raccordement (8) qui sont disposés à distance dans le sens de la circulation et qui sont munis chacun d'un dispositif de serrage (10, 40, 50) dans lequel la bâche est maintenue de manière amovible en plusieurs couches dans une zone de renflement (32, 33)
**caractérisée**
- **en ce que** la bâche (100) est une bâche coulissante latérale pour véhicules utilitaires (1) à rideau latéral (curtainsider), en particulier pour des semi-remorques,
- **en ce que** la hauteur de la bâche (100) est variable en correspondance avec la hauteur de la carrosserie du véhicule avec une différence de hauteur de bâche (B),
- **en ce que** la bâche est placée, au moins sur un de ses bords (5, 6), dans un pli (38, 39), des zones de la surface de la bâche dirigée vers l'intérieur (I) de l'espace de chargement étant en contact mutuel et une section de plis (30, 31) à plusieurs couches et en forme de boucle étant créée, et
- **en ce que** la zone de plis (30, 31) est fixée dans le dispositif de serrage (10, 40, 50) de telle manière que la zone de renflement (32, 33) de la bâche est disposée en regard du côté extérieur du véhicule (A).

2. Bâche selon la revendication 1, **caractérisée en ce qu'**au moins une des zones de plis exposées (30, 31) forme, à l'extérieur des éléments de raccordement, un pli qui pend vers le bas (38, 39).

3. Bâche selon les revendications 1 et 2, **caractérisée en ce que**, à chaque dispositif de serrage (10, 40), on associe une barre pleine (14) dont la dimension en longueur ne dépasse pas la dimension transversale du dispositif de raccordement (10, 40) et autour de laquelle est enroulée la matière de la section de plis exposée (30, 31) de la bâche (100), la section de plis (30, 31) formant, avec la barre pleine (14), une zone de renflement à plusieurs couches (32, 33).

4. Bâche selon la revendication 3, **caractérisée en ce que** la barre pleine (14) comporte au moins une arête (barrette 15) et **en ce que** ie dispositif de serrage (10, 40) comporte au moins un logement d'arête compatible qui fixe en rotation, par verrouillage de forme, la barre pleine (14) insérée dans le dispositif de serrage (10, 40) avec la zone de plis (30, 31) qui est disposée autour.

5. Bâche selon la revendication 4, **caractérisée en ce que** la barre pleine (14) comporte une surface enveloppante cylindrique avec une barrette (15) qui s'étend coaxialement sur cette surface et qui peut être placée, au moins partiellement, de manière fixe, entre les joues de serrage du dispositif de serrage (10, 40).

6. Bâche selon au moins l'une quelconque des revendications précédentes, **caractérisée en ce que** la barre pleine (14) est fabriqué sous la forme d'une section d'une barre en métal ou en matière synthétique, en particulier d'un profilé filé.

7. Bâche selon au moins l'une quelconque des revendications précédentes, **caractérisée en ce que** les éléments de raccordement comportent, sur le bord supérieur (5) de la bâche, à chaque fois, au moins une roulette de bâche (70) qui est guidée dans un chapeau extérieur (7) de la carrosserie du véhicule de telle manière que la bâche non tendue puisse être coulissée longitudinalement.

8. Bâche selon au moins l'une quelconque des revendications précédentes, **caractérisée en ce que**, sur l'élément de raccordement (8), sur le bord supérieur (6) de la bâche, on prévoit une partie débordante supérieure (36) de la bâche qui fait saillie du dispositif de serrage (40, 50) et qui est dirigée vers l'intérieur du véhicule (I).

9. Bâche selon au moins l'une quelconque des revendications précédentes, **caractérisée en ce que** les éléments de raccordement sont constitués, sur le bord inférieur (5) du véhicule, par des dispositifs de tension à sangle (20) pour la mise en place avec tension de la bâche sur le cadre extérieur (9) du châssis du véhicule, lesdits dispositifs de tension à sangle (20) étant constitués par un dispositif de tension (tendeur 22) et d'une bande de sangle (28) et lesdits dispositifs de tension à sangle (20) étant munis, à chaque fois, à l'une des extrémités de la bande de sangle, d'un dispositif de serrage (10) en vue d'une fixation amovible d'une section de plis (31) exposée de la bâche (100) et, à l'autre extrémité de la bande de sangle, d'un élément pour la fixation sur le cadre extérieur (9) du châssis du véhicule, de préférence un crochet (26).

10. Bâche selon au moins l'une quelconque des revendications précédentes, **caractérisée en ce que** le dispositif de serrage (40) est constitué de deux joues de serrage (41, 42) qui sont disposées symétriquement l'une par rapport à l'autre, qui forment une configuration en forme de "U" et qui sont munies, chacune, d'un perçage (45) pour une liaison par vis (44) et **en ce que** l'évidement (48) destiné à la réception de la barre pleine (14) et de la section de plis (30) de la bâche disposée autour de la barre pleine (14) est usiné dans les joues de serrage (41, 42) du dispositif de serrage (40).

11. Bâche selon au moins l'une quelconque des revendications précédentes, **caractérisée en ce que** la zone de renflement (32) serrée de la bâche (100) est placée dans un dispositif de serrage (50) formé par deux joues de serrage (53, 55) en forme d'arc, les joues de serrage (53, 55) en forme d'arc étant disposées à l'extérieur du véhicule (A).

12. Bâche selon la revendication 11, **caractérisée en ce que** l'extrémité inférieure du pli de la bâche (38) qui est serré se termine au dessus d'une vis de fixation (57) passant à travers les deux joues de serrage (53, 55).

13. Véhicule à rideau latéral (curtainsider), en particulier, semi-remorque, comportant au moins une bâche (100) selon les revendications 1 à 12.
